# FASCICULE DE BREVET EUROPEEN

(11) **EP 2 042 355 B1**
(45) Date de publication et mention de la délivrance du brevet: **21.04.2010**
(21) Numéro de dépôt: 08165319.8
(22) Date de dépôt: 26.09.2008
(51) Int. Cl.: B60G 7/02, B62D 21/09, B62D 21/11

(54) **Système de fixation d'une chape de train arrière a une caisse d'un véhicule de type automobile et procédé de fixation d'une chape de train arrière**
Befestigungssystem einer Hinterachsenkappe an der Karosserie eines Fahrzeugs vom Typ Kfz und Befestigungsverfahren einer Hinterachsenkappe
System for attaching a rear axle yoke to the body of an automobile and method of attaching a rear axle yoke

(30) Priorité: 28.09.2007 FR 0757936
(43) Date de publication de la demande: 01.04.2009
(73) Titulaire: PEUGEOT CITROËN AUTOMOBILES S.A., 78140 Vélizy Villacoublay (FR)
(72) Inventeur: Nicolier, Stéphane, 25340 Clerval (FR); Patois, Christophe, 25310 Thulay (FR)

(56) Documents cités:
- EP-A- 1 057 716
- EP-A- 1 777 085
- DE-A1- 10 308 347

## Description

La présente invention se rapporte à un système de fixation d'une chape de train arrière pour un véhicule, notamment pour un véhicule de type automobile, et à un procédé de fixation d'une chape de train arrière.

Elle concerne plus particulièrement un système de fixation d'une chape de train arrière sur la caisse du véhicule, ce train comprenant deux bras longitudinaux ayant une première extrémité articulée dans ladite chape autour d'un axe d'articulation ; la seconde extrémité des bras étant destinée à être liée à un support d'une roue arrière du véhicule.

Pour un train semi-rigide ou du type multibras, il est connu d'employer une chape présentant une platine fixée à la caisse et deux ailes sensiblement parallèles l'une à l'autre et s'étendant dans un plan normal à la platine. De la sorte, la première extrémité du bras est prisonnière entre les ailes de la chape et est montée oscillante sur ladite chape au moyen d'un axe d'articulation engagé dans des perçages respectifs des ailes.

Il est connu de fixer la chape de train arrière sur la face inférieure de la caisse du véhicule, et plus particulièrement des longerons, au moyen de vis de fixation. Les longerons sont des éléments longitudinaux de la caisse destinés à assurer notamment le renfort de la caisse et la fixation d'éléments de liaison au sol comme le train arrière ; la caisse comportant classiquement deux longerons, respectivement droit et gauche.

Lorsque le véhicule est en marche, le train arrière transmet des efforts à la caisse via cette chape et sa fixation sur le train arrière. La liaison entre le train et la caisse est caractérisée par une raideur statique, une raideur dynamique, et un comportement en endurance.

Le dimensionnement et l'équilibre entre ces trois facteurs rendent cet assemblage complexe et influent directement sur le confort de conduite et sur le comportement routier. De plus, le respect de préconisations d'assemblage et de protection anticorrosive accentue la complexité de l'assemblage.

Dans l'état de la technique, il est connu de disposer une entretoise sur la face supérieure de la caisse, opposée à la chape de fixation et solidairement lié à cette dernière, afin de renforcer la liaison entre la caisse et le train arrière et assurer une meilleure répartition des efforts transitant entre ces deux éléments.

Néanmoins, ces fixations connues emploient des entretoises surdimensionnées, avec des épaisseurs importantes, pour permettre une meilleure répartition des efforts entre le train et la caisse.

En outre, les entretoises de l'état de la technique sont généralement encastrées à l'intérieur d'un logement adéquat à l'intérieur du longeron. Ces entretoises présentent l'inconvénient de limiter l'écoulement des bains de cataphorèse, employés notamment comme traitement anti corrosif, à l'intérieur du longeron, et ainsi de conduire à des zones non traitées susceptibles de corrosion.

Le document EP-A-1 777 085 décrit les caractéristiques du préambule de la revendication 1.

L'invention propose une solution pour diminuer le dimensionnement de l'entretoise en concevant une entretoise profilée répondant toujours aux contraintes mécaniques de fixation d'un train arrière de véhicule. L'invention permet ainsi d'atteindre des objectifs de raideur statique, de raideur dynamique et de comportement en endurance sans surdimensionnement de l'entretoise.

Plus largement, l'invention participe aux prestations de confort de conduite et de comportement routier.

L'invention propose également un procédé de fixation de la chape de train simplifié et garantissant un bon dimensionnement de l'assemblage train/caisse par une réduction du nombre de pièces ainsi que le remplacement d'une ou plusieurs opérations de ferrage tout en respectant les contraintes de passage en cataphorèse. En effet, l'entretoise selon l'invention respecte les préconisations d'anticorrosion grâce à la présence d'encoches permettant la circulation des bains de cataphorèse.

Pour rappel, la cataphorèse est une technique de peinture qui consiste à immerger une pièce dans un bain de peinture hydrosoluble, en mettant la pièce en cathode, et en faisant migrer les particules de peintures en suspension dans le bain au moyen de courant électrique, de l'anode vers la cathode. Les particules de peinture se déposent alors uniformément et sur toute la surface de la pièce immergée, même sur les parties creuses et cachées, ainsi que sur les arêtes vives, contrairement à la peinture au pistolet électrostatique. La pièce est légèrement agitée pendant l'opération qui ne dure que quelques minutes. Ensuite, la peinture est cuite au four. La couche de peinture est fine et régulière, environ vingt micromètres contre soixante-dix micromètres pour la peinture au pistolet. Cette finesse permet de peindre des filetages sans les boucher. Enfin, l'homogénéité de la couche confère à la fixation une excellente tenue à la corrosion.

L'invention propose également de simplifier le montage et le positionnement de l'entretoise à l'intérieur par l'emploi de pions de centrage qui permettent de positionner l'entretoise profilée selon l'invention et de la maintenir provisoirement, avant vissage.

L'invention a donc pour objet un système de fixation d'une chape de train arrière à un longeron de véhicule, notamment de type automobile, ledit longeron comportant une paroi inférieure sur laquelle est fixée la chape et une paroi supérieure rapportée en regard de la paroi inférieure, ces deux parois formant un logement apte à recevoir une entretoise profilée de fixation solidairement liée à la chape de train, caractérisé en ce que l'entretoise comporte une paroi principale de forme générale parallélépipédique et deux parois secondaires reliant les coins opposés de la paroi principale et se croisant à l'intérieur de la paroi principale afin de contribuer à répartir des efforts transmis par le train au longeron.

Selon une caractéristique, les parois secondaires de l'entretoise sont planes et se croisent directement à l'intérieur de la paroi principale de sorte à avoir une forme générale de « X ».

Selon une autre caractéristique, l'entretoise présente des orifices de passage de vis destinées à la fixation de la chape de train sur le longeron. Les orifices de passage des vis sont avantageusement ménagées dans les coins de la paroi principale.

Dans un mode particulier de réalisation, l'entretoise présente dans ses parois des passages permettant un écoulement de fluide, notamment une peinture hydrosoluble, à l'intérieur du longeron. Ces passages sont préférentiellement formés d'encoches ménagées sur deux côtés opposés de la paroi principale et sur les deux parois secondaires.

Dans une réalisation particulière, l'entretoise présente au moins une surépaisseur destinée à recevoir un pion de centrage de l'entretoise dans le longeron. Le pion peut être disposé dans la surépaisseur avant le montage de l'entretoise à l'intérieur du longeron, en saillie de ladite entretoise de sorte à coopérer avec un orifice ménagé dans la paroi inférieure du longeron. Ce pion est en avantageusement en matériau déformable, par exemple en matériau plastique, et présente un diamètre légèrement supérieur au diamètre de l'orifice, de sorte que ledit pion assure également le prémaintien de l'entretoise dans le longeron. Selon une caractéristique, l'entretoise comporte deux surépaisseurs pour accueillir chacune un pion, lesdites surépaisseurs étant ménagées respectivement sur un côté de la paroi principale et sur une paroi secondaire de ladite entretoise.

Dans une conception particulière, l'entretoise est une pièce monobloc. Cette entretoise peut être une pièce réalisée en aluminium.

Dans un mode particulier de réalisation la chape est fixée au longeron au moyen de vis de fixation traversant respectivement la chape, la paroi inférieure du longeron, l'entretoise et la paroi supérieure du longeron, des écrous coopérant avec les extrémités libres des dites vis de fixation.

L'invention a également pour objet un procédé de fixation d'une chape de train arrière à un longeron, le longeron présentant un logement apte à recevoir une entretoise profilée conforme à l'une quelconque des revendications précédentes, le logement étant délimité par une paroi inférieure et une paroi supérieur en regard de ladite paroi inférieure, comportant des étapes dans lesquelles :
- on positionne l'entretoise sur la paroi supérieure côté logement,
- on rapporte la paroi supérieure en regard de la paroi inférieure;
- on visse la chape de train au longeron au moyen de vis de fixation traversant respectivement la paroi inférieure du longeron, l'entretoise et la paroi supérieure du longeron, des écrous coopérant avec les extrémités libres des dites vis de fixation.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- figure 1 : une vue d'ensemble de dessous, en perspective oblique, d'un exemple de réalisation de la fixation selon l'invention, dans son environnement mécanique ;
- figure 2 : une vue d'ensemble de dessus, en perspective oblique, de la même fixation dans son environnement mécanique ;
- figure 3 : une vue isolée de dessus, en perspective oblique, de l'entretoise selon l'invention munie de vis de fixation ;
- figure 4 : une vue isolée de côté, en perspective oblique, de l'entretoise selon l'invention ;
- figure 5 : une vue d'ensemble de dessous, en perspective oblique, d'un longeron de caisse dans lequel est disposée l'entretoise selon l'invention ;
- figure 6 : une vue d'ensemble de dessus, en perspective oblique, du longeron dans lequel est disposée l'entretoise selon l'invention.

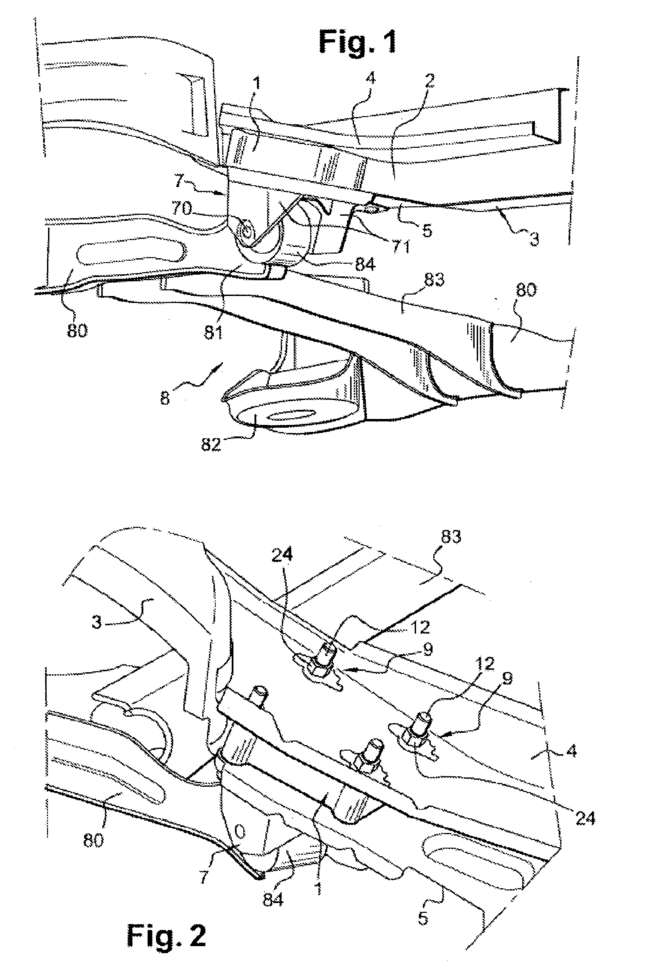

La figure 1 représente un train arrière 8 de véhicule, notamment de véhicule automobile, comprenant deux bras longitudinaux 80, un pour chaque roue arrière non représentée. Chacun des deux bras longitudinaux 80 comporte deux extrémités opposées référencées 81, 82 :
- la première extrémité 81 étant destinée à être fixée à la caisse du véhicule automobile au moyen d'une liaison élastique ; et
- la seconde extrémité 82 étant liée au support de montage de la roue arrière correspondante, par exemple au moyen d'une platine de fixation ou d'une articulation du type connu.

Le train arrière 8, qu'il soit de type multibras ou semi déformable, comprend par ailleurs une traverse 83 s'étendant entre les deux bras longitudinaux 80, et solidairement liée à ses extrémités au bras longitudinal correspondant.

Chaque bras longitudinal 80 est articulé par sa première extrémité 81 sur la caisse dans une chape 7 de fixation de train arrière 8, autour d'un axe de rotation 70 monté libre en rotation dans des ailes 71 de la chape 7 de fixation. Cette première extrémité 81 présente un orifice transversal circulaire, délimitée par une bague 84, traversé par l'axe d'articulation 70.

Préférentiellement, la chape 7 de train 8 est fixée sur un longeron 3, élément de la caisse, au moyen de quatre vis de fixation 9 et écrous cages 12 associés. Le longeron 3 est une poutre qui s'étend selon une direction sensiblement longitudinale du véhicule. Le longeron 3 comporte une paroi inférieure 5 sur laquelle sont fixés les éléments du train 8 et une paroi supérieure 4, ces deux parois 4, 5 formant un logement 2 apte à recevoir une entretoise profilée 1 de fixation solidairement liée à la chape 7 de fixation.

L'entretoise profilée 1, ici réalisée en aluminium, présente une face supérieure 23 qui est en contact avec la paroi supérieure 4 du longeron 3 et une face inférieure 22 qui est en contact avec la paroi inférieure 5 du longeron 3 une fois celle-ci disposée à l'intérieur du logement 2. La chape 7 de fixation est positionnée sous l'entretoise 1, en contact avec la paroi inférieure 5 du longeron 3.

Les vis 9 traversent la chape 7 de train, la paroi inférieure 5 du longeron 3, l'entretoise 1 et la paroi supérieure 4 du longeron 3, assurant ainsi la fixation de la chape 7 sur le longeron 3 ; l'entretoise 1 assurant une bonne répartition des efforts transmis par le train 8 audit longeron 3, entre la paroi inférieure 5 et la paroi supérieure 4 du longeron 3.

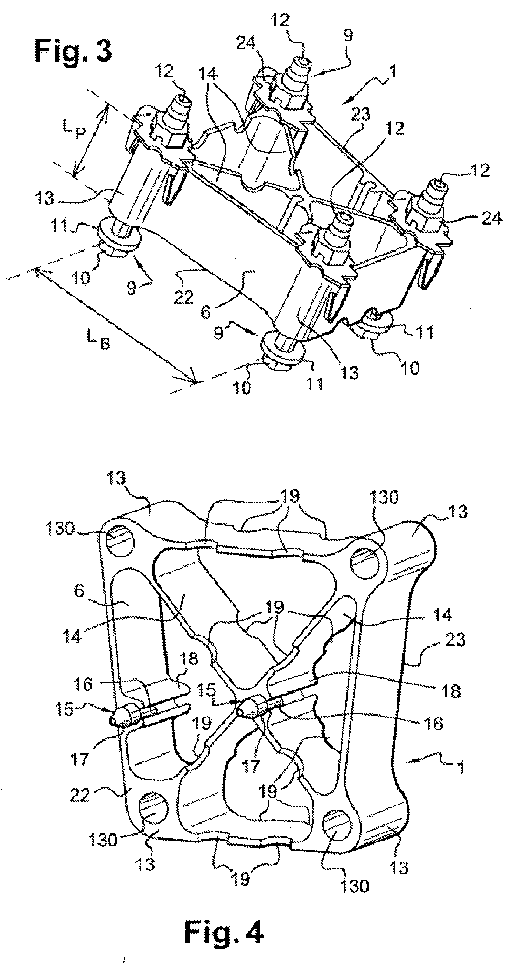

La figure 3 représente une vue isolée de dessus, en perspective oblique, de l'entretoise 1 selon l'invention munie des vis 9 de fixation, la chape 7 et les parois 4, 5 du longeron 3 n'étant pas représentées sur cette figure 3.

L'entretoise 1 présente une paroi principale 6 fermée, de forme générale parallélépipédique, par exemple à base quadrilatère. La largeur L_{P} de la paroi principale 6 est inférieure, dans ce mode de réalisation préféré de l'invention, à la longueur L_{B} d'un côté du quadrilatère formant sa base.

Les coins 13 du quadrilatère formé par la paroi principale 6, avantageusement arrondis, présentent des orifices 130 ménagés pour permettre le passage des vis 9 de fixation dans la largeur de la paroi principale 6.

Les vis 9 comportent, d'un côté, une tête hexagonale 10 et un disque 11 de butée. En position vissée, le disque 11 de butée est en butée contre la chape 7 de fixation, amenant ainsi la chape 7 en butée contre la paroi inférieure 5 du longeron 3. De l'autre côté, les extrémités libres 12 des vis 9 sont en saillie de la paroi supérieure 4 du longeron 3 et coopèrent avec des écrous cages 24. En position vissée, les écrous cages 24 sont en butée contre la paroi supérieure 4 du longeron 3.

La figure 4 représente une vue isolée de côté, en perspective oblique, de l'entretoise selon l'invention.

L'entretoise 1 comporte en outre deux parois secondaires 14 reliant les coins 13 opposés de la paroi principale 6 et se croisant à l'intérieur de la paroi principale 6. Ces parois secondaires 14 permettent une meilleure répartition des efforts que dans l'état de la technique. Les objectifs de raideur statique, de raideur dynamique et de comportement en endurance sont ainsi plus facilement atteints et ce, sans surdimensionnement de l'entretoise 1.

Ces parois secondaires 14 sont planes et se croisent directement à l'intérieur de la paroi principale 6 de sorte à avoir une forme générale de « X ». Ainsi, ces parois secondaires 14 correspondent aux diagonales du quadrilatère formant la base de la paroi principale 6.

Selon l'invention, l'entretoise profilée 1 est positionnée et prémaintenue sur le longeron 3 (avant l'opération de vissage et donc la fixation de la chape), et plus particulièrement sur sa paroi inférieure 5, par des pions 15 de centrage. Dans cet exemple, les pions 15 présente une extrémité 17, en matériau déformable, en saillie de l'entretoise 1, et plus particulièrement en saillie de la face inférieure 22 de l'entretoise 1 qui est amenée à venir en contact avec la paroi inférieure 5 du longeron 3.

Les pions 15 sont avantageusement disposés dans des surépaisseurs 18 de l'entretoise 1, et présentent ainsi une tige 16 insérée en force, voire vissée, dans ladite surépaisseur 18 de l'entretoise 1. Dans un exemple, une première surépaisseur 18 est ménagée dans la largeur d'un côté de la paroi principale 6, et une deuxième surépaisseur 18 est ménagée dans la largeur d'une paroi secondaire diagonale 14 de l'entretoise 1, par exemple à l'intersection des deux parois secondaires 14.

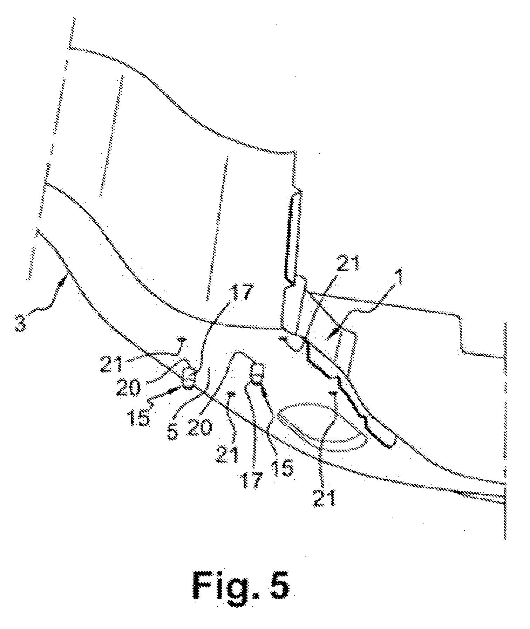

Les extrémités saillantes 17 des pions 15 présentent une forme conique dont la pointe est orientée vers l'extérieur de l'entretoise 1 lorsqu'ils y sont fichés par leur tige 16. Cette forme conique permet de guider l'entretoise 1 sur la paroi inférieure 5 du longeron 3, jusqu'à une position prédéterminée d'assemblage. Cette position est atteinte lorsque les extrémités saillantes 17 des pions 15 sont entièrement introduites dans des orifices 20, représentés sur la figure 5, ménagées dans la paroi inférieure 5 du longeron 3. Cette introduction est réalisée en force, de façon à ce que l'extrémité saillante 17, avantageusement en plastique, des pions 15 se déforme et assure ainsi le maintien provisoire de l'entretoise 1 dans le logement 2 du longeron 3 avant l'assemblage définitif, par vissage, de la chape 7 de fixation du train 8 au longeron 3. En agissant ainsi, l'opérateur peut disposer de ses deux mains pour insérer les vis 9 et les écrous 24. Ainsi, l'extrémité saillante 17 présente un diamètre légèrement supérieur au diamètre de l'orifice 20, de sorte que le pion 15 assure également le prémaintien de l'entretoise 1 dans le longeron 3.

En variante, les pions 15 ne sont pas montés sur l'entretoise 1 mais sur le longeron 3 et les orifices 20 sont ménagés dans l'entretoise 1.

Des encoches de passage 19 de l'entretoise 1 permettent la circulation d'une peinture hydrosoluble à l'intérieur du logement 2 du longeron 3 et donc la réalisation d'une cataphorèse complète à l'intérieur dudit longeron 3. A cet égard, l'entretoise 1 est de préférence métallique, par exemple en aluminium. L'homogénéité de la couche de peinture obtenue permet de respecter des préconisations anticorrosives.

La figure 5 représente une vue d'ensemble de dessous, en perspective oblique, d'un longeron 3 de caisse dans lequel est disposée l'entretoise 1 selon l'invention.

Des orifices 20 de passage de ces pions 15, ménagés ici dans la paroi inférieure 5 du longeron 3, garantissent le positionnement d'assemblage de l'entretoise 1 au moyen des pions 15 qui sont introduits dans lesdits orifices 20 du longeron 3.

Des orifices 21 de passage des vis 9 de fixation sont également ménagés dans la paroi inférieure 5 du longeron 3 pour permettre le vissage définitif de la chape 7 et de l'entretoise 1 au longeron 3.

De la même manière que pour les orifices 21, des orifices, non représentés sur les figures, sont ménagés sur la paroi supérieure 4 du longeron 3 pour laisser passer les vis de fixation 9.

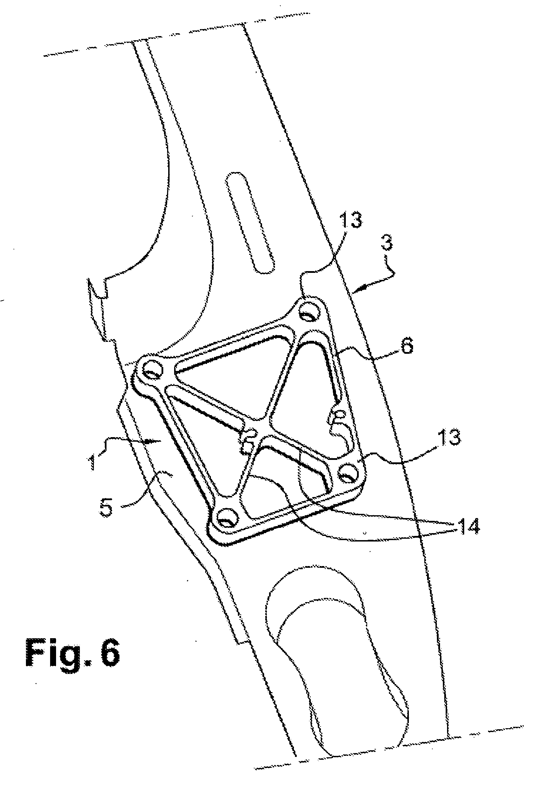

La figure 6 représente une vue d'ensemble de dessus, en perspective oblique, de la paroi inférieure 5 du longeron 3 sur lequel est disposée l'entretoise 1 selon l'invention.

La fixation de la chape 7 de train arrière au longeron 3 comporte ainsi les étapes suivantes :
- on positionne l'entretoise 1 sur la paroi inférieure 5 côté logement 2,
- on rapporte la paroi supérieure 4 en regard de la paroi inférieure 5 ;
- on visse la chape 7 de train au longeron 3 au moyen des vis de fixation 9 traversant respectivement ladite chape 7, la paroi inférieure 5 du longeron 3, l'entretoise 1 et la paroi supérieure 4 du longeron 3, des écrous 24 coopérant avec les extrémités libres 12 des dites vis de fixation 9.

L'étape de positionnement de l'entretoise 1 s'effectue en faisant coopérer les pions de centrage 15 avec les orifices 20 adéquats, ménagés dans la paroi inférieure 5 du longeron 3. Une fois les extrémités saillantes 17 des pions enfoncées dans lesdits orifices 20 jusqu'à ce que l'entretoise soit en contact sur toute sa surface inférieure 22 avec la paroi inférieure 5 du longeron 3, on peut passer à l'étape suivante.

## Revendications

1. Système de fixation d'une chape (7) de train arrière (8) à un longeron (3) de véhicule, notamment de type automobile, ledit longeron (3) comportant une paroi inférieure (5) sur laquelle est fixée la chape (7) et une paroi supérieure (4) rapportée en regard de la paroi inférieure (5), ces deux parois formant un logement (2) apte à recevoir une entretoise profilée (1) de fixation solidairement liée à la chape (7) de train, **caractérisé en ce que** l'entretoise (1) comporte une paroi principale (6) de forme générale parallélépipédique et deux parois secondaires (14) reliant les coins (13) opposés de la paroi principale (6) et se croisant à l'intérieur de la paroi principale (6) afin de contribuer à répartir des efforts transmis par le train (8) au longeron (3).

2. Système de fixation selon la revendication 1, **caractérisé en ce que** les parois secondaires (14) de l'entretoise (1) sont planes et se croisent directement à l'intérieur de la paroi principale (6) de sorte à avoir une forme générale de « X ».

3. Système de fixation selon l'une quelconque des revendications 1 à 2, **caractérisé en ce que** l'entretoise (1) présente des orifices (13) de passage de vis (9) destinées à la fixation de la chape (7) de train sur le longeron (3).

4. Système de fixation selon la revendication 3, **caractérisé en ce que** les orifices (13) de passage des vis (9) sont ménagées dans les coins (13) de la paroi principale (6).

5. Système de fixation selon l'une quelconque des revendications 1 à 4, **caractérisé en ce que** l'entretoise (1) présente dans ses parois (6, 14) des passages (19) permettant un écoulement de fluide, notamment une peinture hydrosoluble, à l'intérieur du longeron (3).

6. Système de fixation selon la revendication 5, **caractérisé en ce que** les passages (19) sont formés d'encoches ménagées sur deux côtés opposés de la paroi principale (6) et sur les deux parois secondaires (14).

7. Système de fixation selon l'une quelconque des revendications 1 à 6, **caractérisé en ce que** l'entretoise (1) présente au moins une surépaisseur (18) destinée à recevoir un pion (15) de centrage de l'entretoise (1) dans le longeron (3).

8. Système de fixation selon la revendication 7, **caractérisé en ce que** le pion (15) est disposé dans la surépaisseur (18) avant le montage de l'entretoise (1) à l'intérieur du longeron (3), en saillie de ladite entretoise (1) de sorte à coopérer avec un orifice (20) ménagé dans la paroi inférieure (5) du longeron (3).

9. Système de fixation selon la revendication 8, **caractérisé en ce que** le pion (15) est en matériau déformable et présente un diamètre légèrement supérieur au diamètre de l'orifice (20), de sorte que ledit pion (15) assure également le prémaintien de l'entretoise (1) dans le longeron (3).

10. Système de fixation selon l'une quelconque des revendications 7 à 9, **caractérisé en ce que** l'entretoise (1) comporte deux surépaisseurs (18) pour accueillir chacune un pion (15), lesdites surépaisseurs (14) étant ménagées respectivement sur un côté de la paroi principale (6) et sur une paroi secondaire (14) de ladite entretoise (1).

11. Système de fixation selon l'une quelconque des revendications précédentes, **caractérisé en ce que** l'entretoise (1) est une pièce monobloc.

12. Système de fixation selon l'une quelconque des revendications précédentes, **caractérisé en ce que** l'entretoise (1) est une pièce réalisée en aluminium.

13. Système de fixation selon l'une quelconque des revendications précédentes, **caractérisé en ce que** la chape (7) est fixée au longeron (3) au moyen de vis de fixation (9) traversant respectivement la chape (7), la paroi inférieure (5) du longeron (3), l'entretoise (1) et la paroi supérieure (4) du longeron (3), des écrous (12) coopérant avec les extrémités libres (12) des dites vis de fixation (9).

14. Procédé de fixation d'une chape de train arrière (8) à un longeron (3), le longeron présentant un logement (2) apte à recevoir une entretoise profilée (1) conforme à l'une quelconque des revendications précédentes, le logement étant délimité par une paroi inférieure (5) et une paroi supérieur (4) en regard de ladite paroi inférieure (5), comportant des étapes dans lesquelles :
- on positionne l'entretoise (1) sur la paroi inférieure (5) côté logement (2),
- on rapporte la paroi supérieure (4) en regard de la paroi inférieure (5) ;
- on visse la chape (7) de train au longeron (3) au moyen de vis de fixation (9) traversant respectivement ladite chape (7), la paroi inférieure (5) du longeron (3), l'entretoise (1) et la paroi supérieure (4) du longeron (3), des écrous (24) coopérant avec les extrémités libres (12) des dites vis de fixation (9).

## Claims

1. System for fastening a yoke (7) of a rear axle assembly (8) to a side member (3) of a vehicle, in particular a motor vehicle, said side member (3) comprising a lower wall (5) on which the yoke (7) is fastened and an upper wall (4) attached facing the lower wall (5), these two walls forming a housing (2) able to hold a profiled fastening space holder (1) connected securely to the axle assembly yoke (7), **characterized in that** the space holder (1) comprises a main wall (6) of generally parallelepipedal form and two secondary walls (14) connecting the opposite corners (13) of the main wall (16) and intersecting one another inside the main wall (6) so as to contribute to the distribution of forces transmitted by the axle assembly (8) to the side member (3).

2. Fastening system according to Claim 1, **characterized in that** the secondary walls (14) of the space holder (1) are flat and intersect one another directly inside the main wall (6) so as have a general "X" shape.

3. Fastening system according to either of Claims 1 and 2, **characterized in that** the space holder (1) has orifices (13) for the passage of screws (9) for fastening the axle assembly yoke (7) on the side member (3).

4. Fastening system according to Claim 3, **characterized in that** the orifices (13) for the passage of screws (9) are made in the corners (13) of the main wall (6).

5. Fastening system according to any one of Claims 1 to 4, **characterized in that** the space holder (1) has passages (19) in its walls (6, 14) enabling a fluid, in particular a water-soluble paint, to flow inside the side member (3).

6. Fastening system according to Claim 5, **characterized in that** the passages (19) are formed by notches made on the two opposite sides of the main wall (6) and on the two secondary walls (14).

7. Fastening system according to any one of Claims 1 to 6, **characterized in that** the space holder (1) has at least one overthickness (18) intended to hold a pin (15) for centring the space holder (1) in the side member (3).

8. Fastening system according to Claim 7, **characterized in that** the pin (15) is located in the overthickness (18) before the space holder (1) is fitted inside the side member (3), protruding from said space holder (1) so as to engage with an orifice (20) made in the lower wall (5) of the side member (3).

9. Fastening system according to Claim 8, **characterized in that** the pin (15) is made of deformable material and has a diameter slightly greater than the diameter of the orifice (20) such that said pin (15) also ensures that the space holder (1) is pre-retained in the side member (3).

10. Fastening system according to any one of Claims 7 to 9, **characterized in that** the space holder (1) comprises two overthicknesses (18) each taking a pin (15), said overthicknesses (14) being made on a side of the main wall (6) and on a secondary wall (14) of said space holder (1), respectively.

11. Fastening system according to any one of the preceding claims, **characterized in that** the space holder (1) is a one-piece component.

12. Fastening system according to any one of the preceding claims, **characterized in that** the space holder (1) is an aluminium component.

13. Fastening system according to any one of the preceding claims, **characterized in that** the yoke (7) is fastened to the side member (3) by means of fastening screws (9) passing through the yoke (7), the lower wall (5) of the side member (3), the space holder (1) and the upper wall (4) of the side member (3), respectively, nuts (12) engaging with the free ends (12) of said fastening screws (9).

14. Method for fastening a yoke of a rear axle assembly (8) to a side member (3), the side member having a housing (2) able to hold a profiled space holder (1) in accordance with any one of the preceding claims, the housing being delimited by a lower wall (5) and an upper wall (4) facing said lower wall (5), said method comprising steps in which:
- the space holder (1) is positioned on the lower wall (5) on the housing (2) side;
- the upper wall (1) is attached facing the lower wall (5); and
- the axle assembly yoke (7) is screwed to the side member (3) by means of fastening screws (9) passing through said yoke (7), the lower wall (5) of the side member (3), the space holder (1) and the upper wall (4) of the side member (3), respectively, nuts (24) engaging with the free ends (12) of said fastening screws (9).

## Patentansprüche

1. System zur Befestigung einer Kappe (7) einer Hinterachse (8) an einem Längsträger (3) eines Fahrzeugs, besonders eines Kraftfahrzeugs, wobei der Längsträger (3) eine untere Wand (5), an der die Kappe (7) befestigt ist, und eine obere Wand (4), die gegenüber der unteren Wand (5) angebracht ist, umfasst, wobei diese beiden Wände eine Aufnahme (2) bilden, die geeignet ist, ein profiliertes Befestigungsdistanzstück (1) aufzunehmen, das fest mit der Achskappe (7) verbunden ist, **dadurch gekennzeichnet, dass** das Distanzstück (1) eine Hauptwand (6) mit allgemein parallelepipeder Form und zwei sekundäre Wände (14) umfasst, die die gegenüberliegenden Ecken (13) der Hauptwand (6) miteinander verbinden und sich im Inneren der Hauptwand (6) kreuzen, um zur Verteilung der von der Achse (8) an den Längsträger (3) übertragenen Kräfte beizutragen.

2. Befestigungssystem nach Anspruch 1, **dadurch gekennzeichnet, dass** die sekundären Wände (14) des Distanzstücks (1) eben sind und sich direkt so im Inneren der Hauptwand (6), dass sie allgemein X-förmig sind.

3. Befestigungssystem nach Anspruch 1 oder 2, **dadurch gekennzeichnet, dass** das Distanzstück (1) Öffnungen (13) zum Durchgang von Schrauben (9) aufweist, die zur Befestigung der Achskappe (7) am Längsträger (3) bestimmt sind.

4. Befestigungssystem nach Anspruch 3, **dadurch gekennzeichnet, dass** die Öffnungen (13) zum Durchgang von Schrauben (9) in den Ecken (13) der Hauptwand (6) angeordnet sind.

5. Befestigungssystem nach einem der Ansprüche 1 bis 4, **dadurch gekennzeichnet, dass** das Distanzstück (1) in seinen Wänden (6, 14) Durchgänge (19) aufweist, die das Hindurchfließen von Fluid, besonders eines wasserlöslichen Lacks, in das Innere des Längsträgers (3) gestatten.

6. Befestigungssystem nach Anspruch 5, **dadurch gekennzeichnet, dass** die Durchgänge (19) mit Nuten ausgebildet sind, die an zwei gegenüberliegenden Seiten der Hauptwand (6) und an den beiden sekundären Wänden (14) vorgesehen sind.

7. Befestigungssystem nach einem der Ansprüche 1 bis 6, **dadurch gekennzeichnet, dass** das Distanzstück (1) mindestens eine Verdickung (18) aufweist, die dazu bestimmt ist, einen Zapfen (15) zur Zentrierung des Distanzstücks (1) im Längsträger (3) aufzunehmen.

8. Befestigungssystem nach Anspruch 7, **dadurch gekennzeichnet, dass** der Zapfen (15) vor der Montage des Distanzstücks (1) im Inneren des Längsträgers (3) in der Verdickung (18) angeordnet ist und vom Distanzstück (1) vorragt, so dass er mit einer in der unteren Wand (5) des Längsträgers (3) vorgesehenen Öffnung (20) zusammenwirkt.

9. Befestigungssystem nach Anspruch 8, **dadurch gekennzeichnet, dass** der Zapfen (15) aus einem deformierbaren Material besteht und einen Durchmesser hat, der etwas größer als der Durchmesser der Öffnung (20) ist, so dass der Zapfen (15) auch das Vor-Halten des Distanzstücks (1) im Längsträger (3) gewährleistet.

10. Befestigungssystem nach einem der Ansprüche 7 bis 9, **dadurch gekennzeichnet, dass** das Distanzstück (1) zwei Verdickungen (18) zur jeweiligen Aufnahme eines Zapfens (15) umfasst, wobei die Verdickungen (14) jeweils an einer Seite der Hauptwand (6) und an einer sekundären Wand (14) des Distanzstücks (1) vorgesehen sind.

11. Befestigungssystem nach einem der vorhergehenden Ansprüche, **dadurch gekennzeichnet, dass** das Distanzstück (1) einteilig ist.

12. Befestigungssystem nach einem der vorhergehenden Ansprüche, **dadurch gekennzeichnet, dass** das Distanzstück (1) ein aus Aluminium hergestelltes Teil ist.

13. Befestigungssystem nach einem der vorhergehenden Ansprüche, **dadurch gekennzeichnet, dass** die Kappe (7) mittels Befestigungsschrauben (9), die jeweils die Kappe (7), die untere Wand (5) des Längsträgers (3), das Distanzstück (1) und die obere Wand (4) des Längsträgers (3) durchqueren, am Längsträger (3) befestigt ist, wobei Muttern (12) mit den freien Enden (12) der Befestigungsschrauben (9) zusammenwirken.

14. Verfahren zur Befestigung einer Kappe einer Hinterachse (8) an einem Längsträger (3), der eine Aufnahme (2) aufweist, die geeignet ist, ein profiliertes Distanzstück (1) aufzunehmen, nach einem der vorhergehenden Ansprüche, wobei die Aufnahme durch eine untere Wand (5) und eine der unteren Wand (5) gegenüberliegende obere Wand (4) begrenzt wird, wobei das Verfahren Schritte umfasst, bei denen
- das Distanzstück (1) an der unteren Wand (5) auf der Seite der Aufnahme (2) positioniert wird,
- die obere Wand (4) gegenüber der unteren Wand (5) angebracht wird und
- die Achskappe (7) mittels Befestigungsschrauben (9), die jeweils die Kappe (7), die untere Wand (5) des Längsträgers (3), das Distanzstück (1) und die obere Wand (4) des Längsträgers (3) durchqueren, an den Längsträger (3) geschraubt wird, wobei Muttern (12) mit den freien Enden (12) der Befestigungsschrauben (9) zusammenwirken.
